# EUROPEAN PATENT APPLICATION

(11) **EP 4 376 194 A1**
(43) Date of publication of application: **29.05.2024**
(21) Application number: 22927921.1
(22) Date of filing: 28.02.2022
(51) Int. Cl.: H01M 50/30

(54) **SHELL, CELL, BATTERY, AND ELECTRICAL DEVICE**

(71) Applicant: Contemporary Amperex Technology Co., Limited, Ningde, Fujian 352100 (CN)
(72) Inventor: CHEN, Xiaobo, Ningde, Fujian 352100 (CN); GU, Mingguang, Ningde, Fujian 352100 (CN); GAO, Xiongwei, Ningde, Fujian 352100 (CN)
(74) Representative: Herrmann, Uwe
(86) International application number: PCT/CN2022/078483
(87) International publication number: WO 2023/159640

(57) **Abstract**

Embodiments of the present disclosure provide a shell, a battery cell, a battery, and a power consumption device, which relate to the technical field of battery technology, wherein a shell is for accommodating an electrode assembly and includes a peripheral wall and pressure relief grooves. The peripheral wall is extended in a first direction and is configured to enclose extension direction of the peripheral wall. The pressure relief grooves are arranged on the peripheral wall, which is configured to crack along the pressure relief grooves when the pressure or temperature inside the shell reaches a threshold, so as to release the pressure inside the shell. A distance between the pressure relief groove adjacent to an end of the peripheral wall and the end is less than or equal to one-third of a length of the peripheral wall, so that the pressure relief groove adjacent to the end of the peripheral wall is closer to the end of the peripheral wall 211, and the emissions inside the battery cell can be discharged quickly from the end closer to the peripheral wall when the peripheral wall cracks along the pressure relief groove 214 for pressure relief, which is more conducive to pressure relief, improving the pressure relief rate and the safety of the battery cell.

## Description

### TECHNICAL FIELD

The present disclosure relates to the technical field of battery technology, and in particular to a shell, a battery cell, a battery, and a power consumption device.

### BACKGROUND ART

With the development of new energy technology, batteries are increasingly widely used, for example, they are applied in mobile phones, laptops, battery cars, electric vehicles, electric aircraft, electric ships, electric toy cars, electric toy ships, electric toy aircraft and electric tools.

As an energy storage element, battery cells generally undergo chemical reactions through electrode assembly and electrolyte so as to output electrical energy. In battery technology, it is necessary to consider both the performance and safety of the battery cells. Therefore, how to improve the safety of the battery cells is an urgent problem to be solved in battery technology.

### SUMMARY

Embodiments of the present disclosure provide a shell, a battery cell, a battery, and a power consumption device, which can effectively improve the safety of the battery cells.

In a first aspect, the embodiments of the present disclosure provide a shell, configured to accommodate an electrode assembly, and the shell includes: a peripheral wall, extending in a first direction and configured to enclose an outer side of the electrode assembly; and pressure relief grooves, arranged on the peripheral wall, wherein the peripheral wall is configured to crack along the pressure relief grooves when a pressure or a temperature inside the shell reaches a threshold, so as to release the pressure inside the shell, wherein a length of the peripheral wall along the first direction is L₁, and a distance between the pressure relief groove adjacent to an end of the peripheral wall and the end is L₂, where L₂ ≤ L₁/3.

In the above technical solution, the pressure relief grooves are arranged on the peripheral wall of the shell, wherein a pressure relief area of the shell is less easily obstructed, which is more conducive to pressure relief. The distance between the pressure relief groove adjacent to the end of the peripheral wall and the end is less than or equal to one-third of the length of the peripheral wall, so that the pressure relief groove adjacent to the end of the peripheral wall is closer to the end, and the emissions inside the battery cell can be quickly discharged from the end position closer to the peripheral wall when the peripheral wall cracks and releases pressure along the pressure relief grooves, which is more conducive to pressure relief, thereby improving the pressure relief rate and the safety of the battery cell.

In some embodiments, when 300mm ≤ L₁ ≤ 600mm, L₂ ≤ 100mm. Therefore, when the length of the peripheral wall is long, the pressure relief groove adj acent to the end of the peripheral wall is not too far away from the end of the peripheral wall, so that the pressure relief groove adjacent to the end of the peripheral wall is closer to the end of the peripheral wall, which is more conducive to pressure relief.

In some embodiments, the peripheral wall is provided with at least one pressure relief groove group, and the pressure relief groove group includes a plurality of pressure relief grooves arranged at intervals along a circumferential direction of the peripheral wall. Such structure enables the shell 21 to relieve pressure from multiple positions in the circumferential direction of the peripheral wall, further improving the pressure relief rate

In some embodiments, the at least one pressure relief groove group includes a first pressure relief groove group and a second pressure relief groove group; and the first pressure relief groove group and the second pressure relief groove group are arranged, along the first direction, at intervals on the peripheral wall, wherein the pressure relief grooves in the first pressure relief groove group and the pressure relief grooves in the second pressure relief groove group are adjacent to two ends of the peripheral wall, respectively. In this way, when the battery cell is in thermal runaway, the emissions in the shell can be quickly discharged from the pressure relief grooves close to two ends of the peripheral wall so as to release the pressure inside the shell, which enables the shell to achieve pressure relief at both ends, further improving the pressure relief rate and ensuring the safety of the battery cells.

In some embodiments, the at least one pressure relief groove group further includes a third pressure relief groove group, wherein the third pressure relief groove group is located, along the first direction, between the first pressure relief groove group and the second pressure relief groove group. In this way, the shell can not only relieve pressure through the pressure relief grooves in the first pressure relief groove group and the pressure relief groove in the second pressure relief groove group, but also relieve pressure through the pressure relief grooves in the third pressure relief groove group located between the first pressure relief groove group and the second pressure relief groove group, further improving the pressure relief rate.

In some embodiments, the third pressure relief groove group is located, along the first direction, in a middle position of the peripheral wall, so that the emissions inside the shell in the middle area of the peripheral wall can be discharged through the pressure relief grooves of the third pressure relief groove group, thereby improving the pressure relief rate.

In some embodiments, 300mm ≤ L₁ ≤ 600mm.

In some embodiments, the peripheral wall is provided with pressure relief portions, and each of the pressure relief portions is defined by the pressure relief groove, wherein the pressure relief portions are configured to flip outward and open when the pressure or the temperature inside the shell reaches a threshold, so as to release the pressure inside the shell. When the thermal runaway of the battery cell causes the pressure or temperature inside the shell to reach the threshold, the pressure relief portion defined by the pressure relief groove will open outward in the form of flipping. After the pressure relief portion is opened, an opening portion will be formed at the position corresponding to the pressure relief portion on the peripheral wall, and the emissions in the shell 21 will be discharged through the opening portion with a large pressure relief area, so that the emissions can be quickly discharged from the shell, further increasing the pressure relief rate.

In some embodiments, each of the pressure relief grooves includes a first groove portion, a second groove portion, and a third groove portion, wherein the first groove portion and the third groove portion are arranged opposite to each other in the first direction, and the first groove portion, the second groove portion, and the third groove portion are sequentially connected to define the pressure relief portion. The pressure relief groove in this configuration has a simple structure, wherein when the pressure or temperature inside the shell reaches a threshold, the peripheral wall cracks along the second groove portion, and then cracks along the first groove portion and the third groove portion, causing the pressure relief portion to gradually flip outward and open, wherein the pressure relief portion is still connected to the rest of the peripheral wall and will not detach and fly out due to the discharge of the emissions.

In some embodiments, the second groove portion includes a straight groove segment extending in the first direction, a length of the straight groove segment is L₃, and a residual thickness of the peripheral wall at a position of the straight groove segment is H, where 1/5H+1/2L₃ >0.55. In this way, the shell 21 meets the pressure requirements of the pressure relief, and sizes of H and L₃ can be set according to the actual process situation.

In some embodiments, L₃ ≤ 10mm, and H ≤ 0.4mm.

In some embodiments, the second groove portion further includes a first arc chamfer segment and a second arc chamfer segment, wherein the first arc chamfer segment is configured to connect the first groove portion and the straight groove segment, and the second arc chamfer portion is configured to connect the second groove portion and the straight groove segment. The arrangement of the first arc chamfer segment enables the first groove portion to transition more smoothly to the straight groove segment, and the arrangement of the second arc chamfer segment enables the second groove portion to transition more smoothly to the straight groove segment, so that the outward flipping and opening process of the pressure relief portion is smoother.

In some embodiments, the radius R₁ of the first arc chamfer segment is ≤ 5mm; and/or, the radius R₂ of the second arc chamfer segment is ≤ 5mm.

In some embodiments, the peripheral wall is a cylinder.

In some embodiments, the pressure relief grooves are arranged on an outer surface of the peripheral wall. In this way, it is easier to form the pressure relief grooves on the peripheral wall.

In a second aspect, the embodiments of the present disclosure provide a battery cell, including: an electrode assembly; and the shell provided in any of the embodiments in the above first aspect, wherein the shell is configured to accommodate the electrode assembly.

In a third aspect, the embodiments of the present disclosure provide a battery, including: the battery cells provided in any of the embodiments in the above second aspect; and a case, configured to accommodate the battery cells.

In a fourth aspect, the embodiments of the present disclosure provide a power consuming device, including the battery provided in any of the embodiments in the above third aspect.

In a fifth aspect, the embodiments of the present disclosure provide a manufacturing method for a shell, including: providing a shell, wherein the shell is provided with a peripheral wall extending in a first direction; and processing pressure relief grooves on the peripheral wall, wherein the peripheral wall is configured to crack along the pressure relief grooves when a pressure or a temperature inside the shell reaches a threshold, so as to release the pressure inside the shell, wherein a length of the peripheral wall along the first direction is L₁, and a distance between the pressure relief groove adjacent to an end of the peripheral wall and the end is L₂, where L₂ ≤ L₁/3.

In a sixth aspect, the embodiments of the present disclosure provide a manufacturing device for a shell, including: a providing apparatus, configured to provide a shell, wherein the shell is provided with a peripheral wall extending in a first direction; and a processing apparatus, configured to process pressure relief grooves on the peripheral wall, wherein the peripheral wall is configured to crack along the pressure relief grooves when a pressure or a temperature inside the shell reaches a threshold, so as to release the pressure inside the shell, wherein a length of the peripheral wall along the first direction is L₁, and a distance between the pressure relief groove adjacent to an end of the peripheral wall and the end is L₂, where L₂ ≤ L₁/3.

### BRIEF DESCRIPTION OF DRAWINGS

In order to more clearly illustrate technical solutions of the embodiments of the present disclosure, the following will briefly describe drawings to be used in the embodiments of the present disclosure, and it is obvious that the drawings described below are only some embodiments of the present disclosure, and for a person of ordinary skill in the art, other drawings can be obtained according to the described drawings without any creative work.
FIG. 1 is a structural diagram of a vehicle provided in some embodiments of the present disclosure;
FIG. 2 is an exploded view of a battery provided in some embodiments of the present disclosure;
FIG. 3 is an exploded view of a battery cell provided in some embodiments of the present disclosure;
FIG. 4 is a front view of a shell of the battery cell shown in FIG. 3;
FIG. 5 is a front view of the shell provided in further embodiments of the present disclosure;
FIG. 6 is a partial enlarged view of the shell provided in some embodiments of the present disclosure;
FIG. 7 is an A-A sectional view of the shell shown in FIG. 6;
FIG. 8 is a flowchart of a manufacturing method for a shell provided in some embodiments of the present disclosure;
FIG. 9 is a schematic block diagram of a manufacturing device for the shell provided in some embodiments of the present disclosure.

Reference signs: 10-case; 11-first part; 12-second part; 20-battery cell; 21-shell; 211-peripheral wall; 2111-first end; 2112-second end; 2113-pressure relief portion; 212-bottom wall; 213-end cover; 2131-electrode terminal; 214-pressure relief grooves; 214a-first pressure relief groove group; 214b-second pressure relief groove group; 214c-third pressure relief groove group; 2141-first groove portion; 2142-second groove portion; 2142a-straight groove segment; 2142b-first arc chamfer segment; 2142c-second arc chamfer segment; 2143-third groove portion; 22-electrode assembly; 221-positive electrode tab; 222-negative electrode tab; 23-flow collection member; 100-battery; 200-controller; 300-motor; 1000-vehicle; 2000-manufacturing device; 2100-providing apparatus; 2200-processing apparatus; Z-first direction.

### DETAILED DESCRIPTION OF EMBODIMENTS

In order to make objectives, technical solutions, and advantages of the embodiments of the present disclosure clearer, the technical solutions in the embodiments of the present disclosure will be described clearly below in conjunction with drawings in the embodiments of the present disclosure, and apparently, the embodiments described are some but not all embodiments of the present disclosure. Based on the embodiments in the present disclosure, all of other embodiments, obtained by those ordinarily skilled in the art without any creative efforts, shall fall within the scope of protection of the present disclosure.

Unless otherwise defined, all technical and scientific terms used in the present disclosure have the same meanings as those commonly understood by those skilled in the art to which the present disclosure belongs; the terms used in the description of the present disclosure are merely for the purpose of describing specific embodiments, but are not intended to limit the present disclosure; the terms "comprise (include)" and "have" and any variations thereof in the description and the claims of the present disclosure as well as the above Brief Description of Drawings are intended to be non-exclusive. The terms "first", "second" and the like in the description and the claims of the present disclosure or the above drawings are used to distinguish different objects, rather than describing a specific order or a primary-secondary relationship.

The phrase "embodiment" mentioned in the present disclosure means that specific features, structures, and characteristics described in combination with the embodiment may be contained in at least one embodiment of the present disclosure. This phrase appearing at various positions in the description does not necessarily refer to the same embodiment, or an independent or alternative embodiment exclusive of another embodiment.

In the description of the present disclosure, it should be noted that unless otherwise explicitly specified and defined, the terms "install (mount)", "join", "connect", and "attach" should be understood in a broad sense, for example, it may be a fixed connection, a detachable connection, or an integrated connection; it may be a direct connection or an indirect connection via an intermediary, or inner communication between two elements. For those ordinarily skilled in the art, specific meanings of the above-mentioned terms in the present disclosure can be understood according to specific circumstances.

In the present disclosure, the term "and/or" only indicates a relation describing the related objects, which indicates that there may be three kinds of relations. For example, "A and/or B" may indicate that A exists alone, A and B exist at the same time, or B exists alone. In addition, the character "/" in the present disclosure generally indicates that the contextual objects have an "OR" relation.

In the embodiments of the present disclosure, the same reference numerals indicate the same components, and for the sake of brevity, detailed descriptions of the same components are omitted in different embodiments. It should be understood that the dimensions such as the thickness, length and width of various components and the overall thickness, length and width of the integrated apparatus in the embodiments of the present disclosure shown in the accompanying drawings are only illustrative, and should not constitute any limitation on the present disclosure.

In the present disclosure, "plurality of" refers to more than two (including two).

In the present disclosure, the battery cell may include a lithium-ion secondary battery, a lithium-ion primary battery, a lithium-sulfur battery, a sodium-lithium ion battery, a sodium-ion battery or a magnesium-on battery, etc., and the embodiments of the present disclosure are not limited to this. The battery cell may have a cylindrical, flat, or rectangular shape or other shapes, and the embodiments of the present disclosure are not limited to this. Battery cells are generally divided into three types according to the packaging: cylindrical battery cells, square battery cells and pouch battery cells, and the embodiments of the present disclosure are not limited to this.

The battery mentioned in the embodiment of the present disclosure refers to a single physical module including one or more battery cells to provide higher voltage and capacity. For example, the battery mentioned in the present disclosure may include a battery module or a battery pack, etc. A battery generally includes a case for encapsulating one or more battery cells. The case can prevent liquid or other foreign matter from influencing the charging or discharging of the battery cell.

The battery cell includes an electrode assembly and electrolyte, and the electrode assembly is composed of a positive pole piece, a negative pole piece and an isolating membrane. The battery cell works mainly by metal ions moving between the positive pole piece and the negative pole piece. The positive pole piece includes a positive current collector and a positive electrode active substance layer. The positive electrode active substance layer is coated on the surface of the positive current collector, the positive current collector without the positive electrode active substance layer protrudes from the positive current collector coated with the positive electrode active substance layer, and the positive current collector without the positive electrode active substance layer is used as a positive electrode tab. Taking a lithium ion battery as an example, the positive current collector may be made of aluminum, and the positive active substance may be lithium cobalt, lithium iron phosphate, lithium ternary or lithium manganate, etc. The negative pole piece includes a negative current collector and a negative active substance layer. The negative active substance layer is coated on the surface of the negative current collector, the negative current collector without the negative active substance layer protrudes from the negative current collector coated with the negative active substance layer, and the negative current collector without the negative active substance layer is used as a negative electrode tab. The negative current collector may be made of copper, and the negative active substance may be carbon or silicon, etc. In order to ensure that a large current can pass without fusing, a plurality of positive electrode tabs are stacked together, and a plurality of negative electrode tabs are stacked together. The material of the isolating membrane may be PP (polypropylene) or PE (polyethylene), etc. In addition, the electrode assembly may have a wound structure or a laminated structure, and the embodiments of the present disclosure are not limited to this.

For the development of battery technology, many design factors should be considered at the same time, such as energy density, cycle life, discharge capacity, charge-discharge rate and other performance parameters. In addition, it is also necessary to consider the safety of batteries.

For the battery cell, in order to ensure the safety thereof, the battery cell is generally provided with a pressure relief mechanism, and the pressure inside the battery cell is released through the pressure relief mechanism.

The inventors noticed that even if the pressure relief mechanism is installed in the battery cell, there is still a frequent risk of fire and explosion in the battery cell. The inventor's research found that at present, the pressure relief mechanism is generally provided on an end cover of the battery cell, and after multiple battery cells are stacked together, the pressure relief mechanism on the end cover will be blocked by other battery cells, resulting in delayed pressure relief and safety accidents.

In view of this, the embodiments of the present disclosure provide a shell, wherein pressure relief grooves are arranged on a peripheral wall of the shell, and along an extension direction of the peripheral wall, a distance between the pressure relief groove adjacent to an end of the peripheral wall and the end is less than or equal to one-third of a length of the peripheral wall.

In such battery cells, the pressure relief grooves are arranged on the peripheral wall of the shell, so that a pressure relief area of the shell is less easily obstructed and more conducive to pressure relief. The distance between the pressure relief groove adjacent to the end of the peripheral wall and the end is less than or equal to one-third of the length of the peripheral wall, so that the pressure relief groove adjacent to the end of the peripheral wall is closer to the end, and the emissions inside the battery cell can be quickly discharged from the end position closer to the peripheral wall when the peripheral wall cracks and releases pressure along the pressure relief grooves, which is more conducive to pressure relief, improving the pressure relief rate and the safety of the battery cell.

The shell described in the embodiments of the present disclosure is applicable for battery cells, batteries, and power consumption devices.

The power consumption devices may be vehicles, mobile phones, portable devices, notebook computers, ships, spacecraft, electric toys and electric tools, etc. Vehicles may be fuel vehicles, gas vehicles or new energy vehicles, and new energy vehicles may be pure electric vehicles, hybrid electric vehicles or extended-range vehicles, etc. Spacecraft includes airplanes, rockets, space shuttles and spaceships, etc. Electric toys include fixed or mobile electric toys, such as game machines, electric car toys, electric ship toys and electric airplane toys, etc. Electric tools include metal cutting electric tools, grinding electric tools, assembling electric tools and railway electric tools, such as electric drills, electric grinders, electric wrenches, electric screwdrivers, electric hammers, electric impact drills, concrete vibrators and electric planers. The embodiments of the present disclosure do not impose special restrictions on the above-mentioned power consumption devices.

For the convenience of description, the following embodiments take a vehicle as the power consumption device for example.

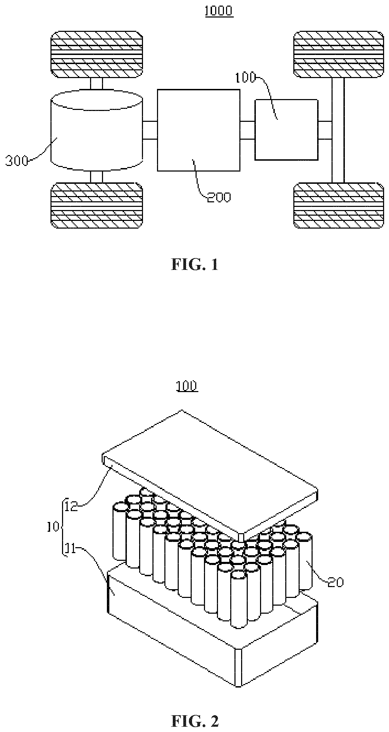

Please refer to FIG. 1, which is a structural diagram of a vehicle 1000 provided in some embodiments of the present disclosure, the interior of the vehicle 1000 is provided with a battery 100, wherein the battery 100 can be provided at a head or a tail of the vehicle 1000. The Battery 100 can be used for the power supply of vehicle 1000, for example, the battery 100 can serve as an operating power supply of vehicle 1000.

The vehicle 1000 can also include a controller 200 and a motor 300, wherein the controller 200 is configured for controlling the battery 100 to supply power to the motor 300, for example, for power requirements of the starting, navigation, and driving of the vehicle 1000.

In some embodiments of the present disclosure, the battery 100 may not only be used as an operating power supply for the vehicle 1000, but also be used as a driving power supply for the vehicle 1000, providing driving power for vehicle 1000 instead or partially instead of fuel oil or natural gas.

Please refer to FIG. 2, which is a structural schematic diagram of a battery 100 provided in some embodiments of the present disclosure, the battery 100 includes a case 10 and a battery cell 20, and the case 10 is configured for accommodating the battery cell 20.

Herein, the case 10 is a component for accommodating the battery cell 20, wherein the case 10 provides an accommodating space for the battery cell 20, and the case 10 may have various structures. In some embodiments, the case 10 may include a first part 11 and a second part 12, and the first part 11 and the second part 12 are mutually covered to define an accommodating space for accommodating the battery cell 20. The first part 11 and the second part 12 may have various shapes, such as cuboids, cylinders, etc. The first part 11 may have a hollow structure with one side opened, and the second part 12 may also have a hollow structure with one side opened. The open side of the second part 12 covers the open side of the first part 11, thus forming the case 10 with an accommodating space. Alternatively, the first part 11 may have a hollow structure with one side opened, and the second part 12 may have a plate-like structure. The second part 12 may cover the open side of the first part 11, thus forming the case 10 with an accommodating space. The first part 11 and the second part 12 may be sealed by a sealing element, which may be a sealing ring, sealant, etc.

In the battery 100, there may be one battery cell 20 or a plurality of battery cells 20. If a plurality of battery cells 20 are provided, the plurality of battery cells 20 may be connected in series, in parallel, or mixed. A mixed connection means that the plurality of battery cells 20 are both connected in series and in parallel. The plurality of battery cells 20 may be connected in series, in parallel, or mixed to form a battery module, and then a plurality of battery modules are connected in series, in parallel, or mixed to form a whole, which is accommodated in the case 10. Alternatively, all the battery cells 20 may be directly connected in series, in parallel, or mixed together, and then all the battery cells 20 as a whole may be accommodated in the case 10.

In some embodiments, the battery 100 may further include a bus component, and the plurality of battery cells 20 may be electrically connected through the bus component, so as to realize series connection, parallel connection or mixed connection of the plurality of battery cells 20. The bus component may be a conductor made of metal, such as copper, iron, aluminum, stainless steel, aluminum alloy, etc.

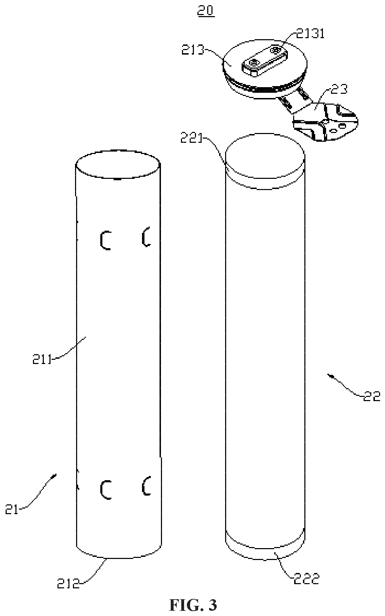

Please refer to FIG. 3, which is an exploded view of a battery cell 20 provided in some embodiments of the present disclosure, the battery cell 20 includes a shell 21and an electrode assembly 22, wherein the electrode assembly 22 are accommodated in the shell 21.

The shell 21 is a component for accommodating the electrode assembly 22. The shell 21 may have various shapes, such as a cylinder, a cuboid, etc. The shell 21 can include a peripheral wall 211, a bottom wall 212, and an end cover 213. The bottom wall 212 is arranged at one end of the peripheral wall 211 in an extension direction, and the peripheral wall 211 is enclosed at an edge of the bottom wall 212, wherein the peripheral wall 211 is integrally formed with the bottom wall 212. In the extension direction of the peripheral wall 211, an opening is formed at one end opposite the bottom wall 212. The end cover 213 is configured to close the opening of the peripheral wall 211, so as to form a closed space inside the shell 21 for accommodating the electrode assembly 22, electrolyte, etc. The end cover 213 can be provided with an electrode terminal 2131, which are configured for electrical connection with electrode assembly 22.

The electrode assembly 22 is a component in the battery cell 20 where electrochemical reaction occurs. The electrode assembly 22 may be a cylinder, a cuboid, or the like. If the electrode assembly 22 is a cylinder, the shell 21 can also be a cylinder; if the electrode assembly 22 is a cuboid, the shell 21 can also be a cuboid.

The electrode assembly 22 may include a positive pole piece, a negative pole piece and an isolating membrane. The electrode assembly 22 may has a wound structure formed by winding a positive pole piece, an isolating membrane and a negative pole piece, or has a laminated structure formed by a stacking arrangement of a positive pole piece, an isolating membrane, and a negative pole piece. The positive pole piece may include a positive current collector and a positive electrode active substance layer that is coated on two opposite sides of the positive current collector. The negative pole piece may include a negative current collector and a negative electrode active substance layer that is coated on two opposite sides of the negative current collector. The electrode assembly 22 is provided with a positive electrode tab 221 and a negative electrode tab 222, wherein the positive electrode tab 221 may be a portion of the positive pole piece that is not coated with a positive active substance layer, and the negative electrode tab 222 may be a portion of the negative pole piece that is not coated with a negative active substance layer. It is possible that the positive electrode tab 221 is electrically connected to the electrode terminal 2131 on the end cover 213, and the negative electrode tab 222 is electrically connected to the bottom wall 212 of the shell 21.

Certainly, the positive electrode tab 221 can be directly connected to the electrode terminal 2131, for example, the positive electrode tab 221 can be directly welded to the electrode terminal 2131. The positive electrode tab 221 can also be indirectly connected to the electrode terminal 2131, for example, the positive electrode tab 221 is indirectly connected to the electrode terminal 2131 through the current collecting member 23. The negative electrode tab 222 can be directly connected to the bottom wall 212, for example, the negative electrode tab 222 can be directly welded to the bottom wall 212. The negative electrode tab 222 can also be indirectly connected to the bottom wall 212, for example, the negative electrode tab 222 is indirectly connected to the bottom wall 212 through the current collecting member 23. As an example, in FIG. 3, the positive electrode tab 221 is indirectly connected to the electrode terminal 2131 through a current collecting member 23, and the negative electrode tab 222 is directly welded to the bottom wall 212.

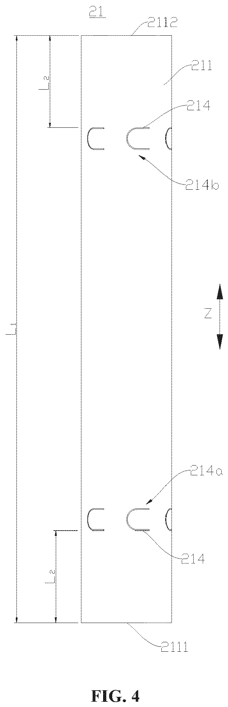

Please refer to FIG. 4, which is a front view of a shell 21 of the battery cell 20 shown in FIG. 3, the embodiments of the present disclosure provide a shell 21 for accommodating an electrode assembly 22, wherein the shell 21 includes a peripheral wall 211 and pressure relief grooves 214. The peripheral wall 211 extends in a first direction Z and is configured to enclose an outer side of the electrode assembly 22. The pressure relief grooves 214 are arranged on the peripheral wall 211, which is configured to crack along the pressure relief grooves 214 when the pressure or temperature inside the shell 21 reaches a threshold, so as to release the pressure inside the shell 21. Herein, along the first direction Z, a length of the peripheral wall 211 is L₁, and a distance between the pressure relief groove 214 adjacent to an end of the peripheral wall 211 and the end is L₂, where L₂ ≤ L₁/3.

The peripheral wall 211 is the main part of the shell 21 extending in the first direction Z, and after the electrode assembly 22 is accommodated inside the shell 21, the peripheral wall 211 will be enclosed on the outer side of the electrode assembly 22. The first direction Z is a length direction of the peripheral wall 211. The peripheral wall 211 can be of various shapes, such as a cylinder, a cuboid, etc. In some embodiments, the shell 21 may also include a bottom wall 212 and an end cover 213, which are arranged at two ends of the peripheral wall 211 along the first direction Z, respectively, wherein the bottom wall 212 is integrally formed with the peripheral wall 211. In further embodiments, the shell 21 may also include two end caps 213, which cover two ends of the peripheral wall 211 in the first direction Z.

The pressure relief grooves 214 can be formed on the peripheral wall 211 in various ways, such as stamping forming, milling processing forming, etc. Each of the pressure relief grooves 214 can be in various shapes, such as annular, "U" shaped, "C" shaped, cross shaped, linear shaped, etc. The positions where the pressure relief grooves 214 are arranged on the peripheral wall 211 are relatively weak positions, wherein when the pressure or temperature inside the shell 21 reaches a threshold, the positions where the pressure relief grooves 214 are arranged on the peripheral wall 211 will crack along the pressure relief grooves 214, so as to achieve the purpose of relieving the pressure inside the shell 21.

The pressure relief groove 214 adjacent to the end of the peripheral wall 211 is the pressure relief groove 214 closest to the end of the peripheral wall 211 on the peripheral wall 211. For example, the peripheral wall 211 has a first end 2111 and a second end 2112 which are opposite to each other in the first direction Z, and a first pressure relief groove, a second pressure relief groove, and a third pressure relief groove are arranged sequentially in a direction from the first end 2111 to the second end 2112 on the peripheral wall 211, wherein the pressure relief groove 214 adjacent to the first end 2111 is the first pressure relief groove, and the pressure relief groove 214 adjacent to the second end wall is the second pressure relief groove. The distance, in the first direction Z, between the pressure relief groove 214 adjacent to the end of the peripheral wall 211 is measured between the closest position from the pressure relief groove 214 to the end of the peripheral wall 211 and the end of the peripheral wall 211.

In this embodiment, the pressure relief groove 214 is arranged on the peripheral wall 211 of the shell 21, and the pressure relief area of the shell 21 is not easily obstructed, which is more conducive to pressure relief.

The inventor found that in the battery cell 20, when the pressure or temperature inside the battery cell 20 increases due to thermal runaway, the middle area inside the shell 21 is occupied by the electrode assembly 22, and there is a gap in the end area of the shell 21, so that more emissions inside the battery cell 20 are concentrated at the end of the shell 21.

Therefore, in the embodiments of the present disclosure, the distance between the pressure relief groove 214 adjacent to the end of the peripheral wall 211 and the end is less than or equal to one-third of the length of the peripheral wall 211, so that the pressure relief groove 214 adjacent to the end of the peripheral wall 211 is closer to the end of the peripheral wall 211, and the emissions inside the battery cell 20 can be discharged quickly from the end closer to the peripheral wall 211 when the peripheral wall 211 cracks along the pressure relief groove 214 for pressure relief, which is more conducive to pressure relief, improving the pressure relief rate and the safety of the battery cell.

In some embodiments, when 300mm ≤ L₁ ≤ 600mm, L₂ ≤ 100mm.

The length of the peripheral wall 211 ranges from 300mm to 600mm, and the overall length of the peripheral wall 211 is long. Therefore, arranging L₂ to no greater than 100mm ensures that the pressure relief groove 214 adjacent to the end of the peripheral wall 211 is not too far away from the end of the peripheral wall 211, so that the pressure relief groove 214 adjacent to the end of the peripheral wall 211 is closer to the end of the peripheral wall 211, which is more conducive to pressure relief.

In some embodiments, the peripheral wall 211 is provided with at least one pressure relief groove group, which includes a plurality of pressure relief grooves 214 arranged at intervals along a circumferential direction of the peripheral wall 211.

There may be one, two, three, etc. pressure relief groove groups provided on the peripheral wall 211. There may be two, three, four, etc. pressure relief grooves 214 in each pressure relief groove group. As an example, the peripheral wall 211 is a cylinder, and the plurality of pressure relief grooves 214 in the pressure relief groove group can be evenly distributed at intervals along the circumferential direction of the peripheral wall 211.

In this embodiment, the plurality of pressure relief grooves 214 in the pressure relief groove group are arranged at intervals along the circumferential direction of the peripheral wall 211, so that the shell 21 can relieve pressure from multiple positions in the circumferential direction of the peripheral wall 211, further improving the pressure relief rate.

In some embodiments, at least one relief groove group includes a first relief groove group 214a and a second relief groove group 214b. The first relief groove group 214a and the second relief groove group 214b are arranged, along the first direction Z, at intervals on the peripheral wall 211, wherein the relief grooves 214 in the first relief groove group 214a and the relief grooves 214 in the second relief groove group 214b are adjacent to two ends of the peripheral wall 211, respectively.

It can be understood that there are a plurality of pressure relief groove groups provided on the peripheral wall 211, wherein the pressure relief groove group adjacent to one end of the peripheral wall 211 among the plurality of pressure relief groove groups is the first pressure relief groove group 214a, and the pressure relief groove group adjacent to the other end of the peripheral wall 211 among the plurality of pressure relief groove groups is the second pressure relief groove group 214b. Only two pressure relief groove groups can be arranged on the peripheral wall 211, namely the first pressure relief groove group 214a and the second pressure relief groove group 214b; certainly, other pressure relief groove groups besides the first pressure relief groove group 214a and the second pressure relief groove group 214b can also be provided on the peripheral wall 211. For example, as shown in FIG. 4, when the length of the peripheral wall 211 L₁ is less than 300mm, only the first relief groove group 214a and the second relief groove group 214b can be arranged on the peripheral wall 211.

For example, the first relief groove group 214a and the second relief groove group 214b are sequentially arranged from the first end 2111 to the second end 2112 of the peripheral wall 211, wherein the relief grooves 214 in the first relief groove group 214a are adjacent to the first end 2111, and the relief grooves 214 in the second relief groove group 214b are adjacent to the second end 2112. The distance between the pressure relief grooves 214 in the first pressure relief groove group 214a and the first end 2111 is L₂, and the distance between the pressure relief grooves 214 in the second pressure relief groove group 214b and the second end 2112 is also L₂.

The distance from the first relief groove group 214a to the first end 2111 and the distance from the second relief groove group 214b to the second end 2112 can be equal or unequal, as long as they are not greater than one-third of the length of the peripheral wall 211.

In this embodiment, since the pressure relief grooves 214 in the first pressure relief groove group 214a and the pressure relief grooves 214 in the second pressure relief groove group 214b are respectively adjacent to two ends of the peripheral wall 211, so that when the battery cell 20 is in thermal runaway, the emissions in the shell 21 can be quickly discharged from the pressure relief grooves 214 close to two ends of the peripheral wall 211 so as to release the pressure inside the shell 21, which enables the shell 21 to achieve pressure relief at both ends, further improving the pressure relief rate and ensuring the safety of the battery cell 20.

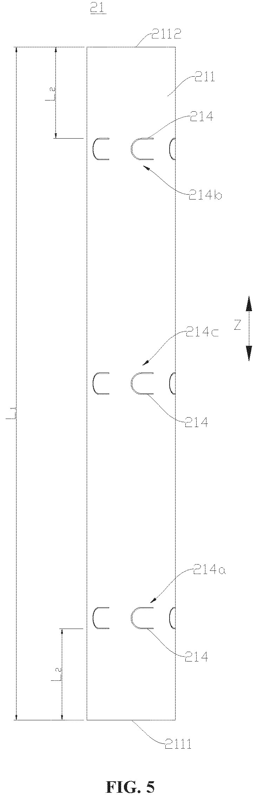

In some embodiments, please refer to FIG. 5, which is the front view of the shell 21 provided in further embodiments of the present disclosure, the at least one relief groove group also includes a third relief groove group 214c, located between the first relief groove group 214a and the second relief groove group 214b along the first direction Z.

The third relief groove group 214c can be provided in a middle position between the first relief groove group 214a and the second relief groove group 214b, or it can be closer to either of the first relief groove group 214a and the second relief groove group 214b. The first pressure relief groove group 214a can be arranged in a middle position of the peripheral wall 211 or deviate from the middle position of the peripheral wall 211.

In this embodiment, since the third pressure relief groove group 214c is also provided on the peripheral wall 211, the shell 21 can not only relieve pressure through the pressure relief grooves 214 in the first pressure relief groove group 214a and the pressure relief groove 214 in the second pressure relief groove group 214b, but also relieve pressure through the pressure relief grooves 214 in the third pressure relief groove group 214c located between the first pressure relief groove group 214a and the second pressure relief groove group 214b, further improving the pressure relief rate.

In some embodiments, please continue to refer to FIG. 5, the third pressure relief groove group 214c is located in the middle position of the peripheral wall 211 along the first direction Z.

The distance from the middle position of the peripheral wall 211 to the first end 2111 of the peripheral wall 211 is equal to the distance from the middle position of the peripheral wall 211 to the second end 2112 of the peripheral wall 211. As an example, the distance between the first relief groove group 214a and the first end 2111 is equal to the distance between the second relief groove group 214b and the second end 2112.

Since the third pressure relief groove group 214c is located in the middle position of the peripheral wall 211, the emissions inside the shell 21 in the middle area of the peripheral wall 211 can be discharged through the pressure relief grooves 214 of the third pressure relief groove group 214c, thereby improving the pressure relief rate.

In some embodiments, as shown in FIG. 5, 300mm ≤ L₁ ≤ 600mm.

The length of the peripheral wall 211 ranges from 300mm to 600mm, and the overall length of the peripheral wall 211 is long. In this case, a third pressure relief groove group 214c can be arranged between the first pressure relief groove group 214a and the second pressure relief groove group 214b to increase the pressure relief rate of the shell 21, so that the emissions inside the battery cell 20 can be quickly discharged.

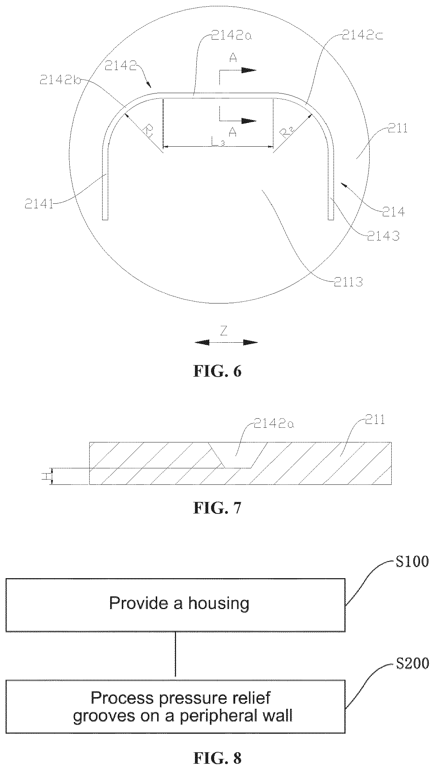

In some embodiments, please refer to FIG. 6, which is a partial enlarged view of the shell 21 provided in some embodiments of the present disclosure, the peripheral wall 211 is provided with pressure relief portions 2113, wherein each of the pressure relief portions 2113 is defined by the pressure relief groove 214, and the pressure relief portion 2113 is configured to flip outward and open when the pressure or temperature inside the shell 21 reaches a threshold, so as to release the pressure inside the shell 21.

The pressure relief portion 2113 is an area defined by the pressure relief groove 214 on the peripheral wall 211, and the pressure relief groove 214 is located at an edge of the pressure relief portion 2113. As an example, the pressure relief groove 214 is "U" shaped and "C" shaped, both of which can define the pressure relief portion 2113, and after flipped outward and opened, the pressure relief portion 2113 will not detach from the peripheral wall 211. In the embodiment where the pressure relief groove 214 is "C" shaped, the pressure relief groove 214 is circular groove with a distance between the head and tail ends, such as a semi-circular groove.

When the thermal runaway of the battery cell 20 causes the pressure or temperature inside the shell 21 to reach the threshold, after the peripheral wall 211 cracks along the pressure relief grooves214, the pressure relief portion 2113 defined by the pressure relief groove 214 will open outward in the form of flipping. After the pressure relief portion 2113 is opened, an opening portion will be formed at the position corresponding to the pressure relief portion 2113 on the peripheral wall 211, and the emissions in the shell 21 will be discharged through the opening portion with a large pressure relief area, so that the emissions can be quickly discharged from the shell 21, further increasing the pressure relief rate.

In some embodiments, each of the pressure relief grooves 214 may include a first groove portion 2141, a second groove portion 2142, and a third groove portion 2143. The first groove portion 2141 and the third groove portion 2143 are arranged opposite to each other in the first direction Z, and the first groove portion 2141, the second groove portion 2142, and the third groove portion 2143 are sequentially connected to define the pressure relief section 2113.

The first groove portion 2141 and the third groove portion 2143 both extend along the circumferential direction of the peripheral wall 211. The second groove portion 2142 can be a straight portion extending along the first direction Z or an arc portion.

As an example, depths of the first groove portion 2141, the second groove portion 2142, and the third groove portion 2143 are equal.

It can be understood that in this embodiment, the pressure relief groove 214 is roughly "U" shaped. The pressure relief groove 214 in this configuration has a simple structure. When the pressure or temperature inside the shell 21 reaches a threshold, the peripheral wall 211 cracks along the second groove portion 2142, and then cracks along the first groove portion 2141 and the third groove portion 2143, causing the pressure relief portion 2113 to gradually flip outward and open. The pressure relief portion 2113 is still connected to the rest of the peripheral wall 211 and will not detach and fly out due to the discharge of the emissions.

In some embodiments, please refer to FIG.s 6 and 7, wherein FIG. 7 is an A-A sectional view of the shell 21 shown in FIG. 6, the second groove portion 2142 includes a straight groove segment 2142a extending along the first direction Z, and a length thereof is L₃. The residual thickness of the peripheral wall 211 at the position of the straight groove segment 2142a is H, which satisfies: 1/5×H+1/2×L₃> 0.55. The residual thickness refers to the remaining thickness at the position of the straight groove segment 2142a after the straight groove segment 2142a is arranged on the peripheral wall 211.

In this way, the shell 21 meets the pressure requirements of the pressure relief, and sizes of H and L₃ can be set according to the actual process situation. For example, when the size of H needs to be set larger, L₃ can be set smaller accordingly. The relief pressure herein refers to a detonation pressure of the shell 21. Before the internal pressure of the shell 21 reaches the detonation pressure, the pressure relief portion 2113 of peripheral wall 211 will not open for pressure relief, and when the internal pressure of shell 21 does not reach the detonation pressure, the pressure relief portion 2113 will start to open for pressure relief.

As an example, 1/5×H+1/2×L₃=34/15, and in this case, the relief pressure of the shell 21 is better.

In some embodiments, L₃ ≤ 10mm and H ≤ 0.4mm.

The length of the straight groove segment 2142a is L₃ ≤ 10mm, so that the length of the straight groove segment 2142a is not too long. The residual thickness of the peripheral wall 211 at the position of the straight groove segment 2142a is H ≤ 0.4mm, so that the residual thickness is not too thick. When the pressure inside the shell 21 reaches the detonation pressure, the peripheral wall 211 is more likely to crack from the positions of the straight groove segments 2142a of the second groove portions 2142, ultimately causing the pressure relief portions 2113 to flip outward and open.

In some embodiments, please continue to refer to FIG. 6, the second groove portions 2142 also includes a first arc chamfer segment 2142b and a second arc chamfer segment 2142c. The first arc chamfer segment 2142b is configured to connect the first groove portion 2141 and the straight groove segment 2142a, and the second arc chamfer segment 2142c is configured to connect the second groove portion 2142 and the straight groove segment 2142a.

The radius of the first arc chamfer segment 2142b and the radius of the second arc chamfer segment 2142c can be equal or unequal.

As an example, both of the first groove portion 2141 and the straight groove portion 2142a are tangent to the first arc chamfer segment 2142b, and both of the second groove portion 2142 and the straight groove segment 2142a are tangent to the second arc chamfer segment 2142c.

In this embodiment, the arrangement of the first arc chamfer segment 2142b enables the first groove portion 2141 to transition more smoothly to the straight groove segment 2142a, and the arrangement of the second arc chamfer segment 2142c enables the second groove portion 2142 to transition more smoothly to the straight groove segment 2142a, so that the outward flipping and opening process of the pressure relief portion 2113 is smoother.

In some embodiments, the radius R₁ of the first arc chamfer segment 2142b is ≤ 5mm; and/or, the radius R₂ of the second arc chamfer segment 2142c is ≤ 5mm.

In some embodiments, the peripheral wall 211 is a cylinder.

It is understandable that the shell 21 is of a cylindrical structure suitable for cylindrical battery cells.

In the embodiment where the first groove portion 2141, the second groove portion 2142, and the third groove portion 2143 of each of the pressure relief grooves 214 are sequentially connected to define the pressure relief portion 2113, the pressure relief portion 2113 is in a curved state due to the peripheral wall 211 is a cylinder. After the pressure or temperature inside the shell 21 reaches a threshold so that the peripheral wall 211 cracks along the pressure relief groove 214, the pressure relief portion 2113 in the curved state is more likely to flip outward and open so as to release the pressure inside the shell 21.

In some embodiments, the pressure relief grooves 214 are arranged on an outer surface of the peripheral wall 211. In this way, it is easier to form the pressure relief grooves 214 on the peripheral wall 211.

In further embodiments, the pressure relief grooves 214 can also be arranged on an inner surface of the peripheral wall 211.

The embodiments of the present disclosure provide a battery cell 20, including an electrode assembly 22 and the shell 21 provided in any of the above embodiments, wherein the shell is configured to accommodate the electrode assembly 22.

The embodiments of the present disclosure provide a battery 100, including a case 10 and the battery cells 20 provided in any of the above embodiments, wherein the case 10 is configured to accommodate the battery cells 20.

The embodiments of the present disclosure provide a power consuming device, including a battery 100 provided in any of the above embodiments.

The power consuming device can be any of the devices mentioned above that apply the battery 100.

Please refer to FIG. 4, the embodiments of the present disclosure provides a cylindrical shell for accommodating the electrode assembly 22. The peripheral wall 211 of the shell 21 is provided with the first relief groove group 214a and the second relief groove group 214b which are respectively adjacent to two ends of the peripheral wall 211. A plurality of relief grooves 214 in the first relief groove group 214a are distributed at intervals along the circumferential direction of the peripheral wall 211, and a plurality of relief grooves 214 in the second relief groove group 214b are distributed at intervals along the circumferential direction of the peripheral wall 211. The distance between the pressure relief grooves 214 in the first pressure relief groove group 214a and one end of the peripheral wall 211 is less than or equal to one-third of the length of the peripheral wall 211, and the distance between the pressure relief grooves 214 in the second pressure relief groove group 214b and the other end of the peripheral wall 211 is less than or equal to one-third of the length of the peripheral wall 211. Herein, each of the pressure relief grooves 214 is roughly in a "U" shape.

In such a cylindrical shell, the distance between the pressure relief grooves 214 in the first pressure relief groove group 214a and one end of the peripheral wall 211 is less than or equal to one-third of the length of the peripheral wall 211, and the distance between the pressure relief grooves 214 in the second pressure relief groove group 214b and the other end of the peripheral wall 211 is less than or equal to one-third of the length of the peripheral wall 211, which makes the pressure relief grooves 214 in the first pressure relief groove group 214a and the pressure relief grooves 214 in the second pressure relief groove group 214b close to two ends of the peripheral wall 211, respectively, so that the emissions inside the battery cell 20 can be quickly discharged from two end positions closer to the peripheral wall 211 when the peripheral wall 211 cracks along the pressure relief grooves 214 for pressure relief, which is more conducive to pressure relief, thereby improving the pressure relief rate and the safety of the battery cell 20.

Please refer to FIG. 8, which is a flowchart of the manufacturing method for the shell 21 provided in some embodiments of the present disclosure, the embodiments of the present disclosure provide a manufacturing method for the shell 21, which includes:
S100: providing a shell 21, wherein the shell 21 is provided with a peripheral wall 211 extending in the first direction Z; and
S200: processing the pressure relief grooves 214 on the peripheral wall 211.

In the above, the peripheral wall 211 is configured to crack along the pressure relief grooves 214 when the pressure or temperature inside the shell 21 reaches a threshold, so as to release the pressure inside the shell 21; along the first direction Z, the length of the peripheral wall 211 is L₁, and the distance between the pressure relief groove 214 adjacent to the end of the peripheral wall 211 and the end is L₂, satisfying the requirement of L₂ ≤ L₁/3.

It should be noted that the relevant structures of the shell 21 manufactured by the manufacturing method provided in the above embodiments can be referred to the shell 21 provided in the aforementioned embodiments, which will not be repeated herein.

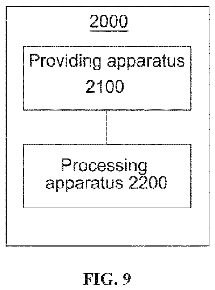

Please refer to FIG. 9, which is a schematic block diagram of the manufacturing device 2000 for the shell 21 provided in some embodiments of the present disclosure, the present disclosure also provides a manufacturing device 2000 for the shell 21, wherein the manufacturing device 2000 includes a providing apparatus 2100 and a processing apparatus 2200.

The providing apparatus 2100 is configured to provide the shell 21, which is provided with a peripheral wall 211 extending in the first direction Z. The processing apparatus 2200 is configured to process the pressure relief grooves 214 on the peripheral wall 211. Herein, the peripheral wall 211 is configured to crack along the pressure relief grooves 214 when the pressure or temperature inside the shell 21 reaches a threshold, so as to release the pressure inside the shell 21. the length of the peripheral wall 211 along the first direction Z is L₁, and the distance between the pressure relief groove 214 adjacent to the end of the peripheral wall 211 and the end is L₂, satisfying the requirement of L₂ ≤ L₁/3.

It should be noted that the relevant structures of the shell 21 manufactured by the manufacturing device 2000 provided by the above embodiments can be referred to the shell 21 provided in the aforementioned embodiments, which will not be repeated herein.

It should be noted that in the absence of conflicts, the embodiments and the features in the embodiments in the present disclosure can be combined with each other.

The above embodiments are only used to illustrate the technical solutions of the present disclosure and are not intended to limit it. For those skilled in the art, the present disclosure may undergo various modifications and changes. Any modifications, equivalent replacements, improvements, etc. made within the spirit and principles of the present disclosure shall be included within the scope of protection of the present disclosure.

## Claims

1. A shell for accommodating an electrode assembly, comprising:
a peripheral wall, extending in a first direction and configured to enclose an outer side of the electrode assembly; and
pressure relief grooves, arranged on the peripheral wall, wherein the peripheral wall is configured to crack along the pressure relief grooves when a pressure or a temperature inside the shell reaches a threshold, so as to release the pressure inside the shell,
wherein a length of the peripheral wall along the first direction is L₁, and a distance between the pressure relief groove adjacent to an end of the peripheral wall and the end is L₂, where L₂ ≤ Li/3.

2. The shell according to claim 1, wherein when 300mm ≤ L₁ ≤ 600mm, L₂ ≤ 100mm.

3. The shell according to claim 1 or 2, wherein the peripheral wall is provided with at least one pressure relief groove group, and the pressure relief groove group comprises a plurality of pressure relief grooves arranged at intervals along a circumferential direction of the peripheral wall.

4. The shell according to claim 3, wherein the at least one pressure relief groove group comprises a first pressure relief groove group and a second pressure relief groove group,
wherein the first pressure relief groove group and the second pressure relief groove group are arranged, along the first direction, at intervals on the peripheral wall, wherein the pressure relief grooves in the first pressure relief groove group and the pressure relief grooves in the second pressure relief groove group are adjacent to two ends of the peripheral wall, respectively.

5. The shell according to claim 4, wherein the at least one pressure relief groove group further comprises a third pressure relief groove group, wherein the third pressure relief groove group is located, along the first direction, between the first pressure relief groove group and the second pressure relief groove group.

6. The shell according to claim 5, wherein the third pressure relief groove group is located, along the first direction, in a middle position of the peripheral wall.

7. The shell according to claim 4 or 5, wherein 300mm ≤ L₁ ≤ 600mm.

8. The shell according to any one of claims 1 to 7, wherein the peripheral wall is provided with pressure relief portions, and each of the pressure relief portions is defined by the pressure relief groove, wherein the pressure relief portions are configured to flip outward and open when the pressure or the temperature inside the shell reaches a threshold, so as to release the pressure inside the shell.

9. The shell according to claim 8, wherein each of the pressure relief grooves comprises a first groove portion, a second groove portion, and a third groove portion, wherein the first groove portion and the third groove portion are arranged opposite to each other in the first direction, and the first groove portion, the second groove portion, and the third groove portion are sequentially connected to define the pressure relief portion.

10. The shell according to claim 9, wherein the second groove portion comprises a straight groove segment extending in the first direction, wherein a length of the straight groove segment is L₃, and a residual thickness of the peripheral wall at a position of the straight groove segment is H, where 1/5H+1/2L₃>0.55.

11. The shell according to claim 10, wherein L₃ ≤ 10mm, and H ≤ 0.4mm.

12. The shell according to claim 10 or 11, wherein the second groove portion further comprises a first arc chamfer segment and a second arc chamfer segment, wherein the first arc chamfer segment is configured to connect the first groove portion and the straight groove segment, and the second arc chamfer portion is configured to connect the second groove portion and the straight groove segment.

13. The shell according to claim 12, wherein a radius of the first arc chamfer segment is R1, where R₁≤ 5mm; and/or, a radius of the second arc chamfer segment is R₂, where R₂ ≤ 5mm.

14. The shell according to any one of claims 1 to 13, wherein the peripheral wall is a cylinder.

15. The shell according to any one of claims 1 to 14, wherein the pressure relief grooves are arranged on an outer surface of the peripheral wall.

16. A battery cell, comprising:
an electrode assembly; and
the shell according to any one of claims 1 to 15, wherein the shell is configured to accommodate the electrode assembly.

17. A battery, comprising:
the battery cells according to claim 16; and
a case, configured to accommodate the battery cells.

18. A power consumption device, comprising the battery according to claim 17.

19. A manufacturing method for a shell, comprising:
providing a shell, wherein the shell is provided with a peripheral wall extending in a first direction; and
processing pressure relief grooves on the peripheral wall,
wherein the peripheral wall is configured to crack along the pressure relief grooves when a pressure or a temperature inside the shell reaches a threshold, so as to release the pressure inside the shell, wherein a length of the peripheral wall along the first direction is L₁, and a distance between the pressure relief groove adjacent to an end of the peripheral wall and the end is L₂, where L₂ ≤ L₁/3

20. A manufacturing device for a shell, comprising:
a providing apparatus, configured to provide a shell, wherein the shell is provided with a peripheral wall extending in a first direction; and
a processing apparatus, configured to process pressure relief grooves on the peripheral wall,
wherein the peripheral wall is configured to crack along the pressure relief grooves when a pressure or a temperature inside the shell reaches a threshold, so as to release the pressure inside the shell, wherein a length of the peripheral wall along the first direction is L₁, and a distance between the pressure relief groove adjacent to an end of the peripheral wall and the end is L₂, where L₂ ≤ L₁/3.
